# EUROPEAN PATENT SPECIFICATION

(11) **EP 3 437 900 B1**
(45) Date of publication and mention of the grant of the patent: **12.05.2021**
(21) Application number: 17775654.1
(22) Date of filing: 13.02.2017
(51) Int. Cl.: B60C 19/00, F16F 15/10, B60C 23/04

(54) **PNEUMATIC TIRE**
LUFTREIFEN
PNEUMATIQUE

(30) Priority: 29.03.2016 KR 20160037778; 07.02.2017 KR 20170016917
(43) Date of publication of application: 06.02.2019
(73) Proprietor: Nexen Tire Corporation, Yangsan-si, Gyeongsangnam-do 50592 (KR)
(72) Inventor: LEE, Dong Min, Yangsan-si Gyeongsangnam-do 50592 (KR); NA, Jae Bong, Yangsan-si Gyeongsangnam-do 50592 (KR)
(74) Representative: Patentanwälte Ruff, Wilhelm, Beier, Dauster & Partner mbB
(86) International application number: PCT/KR2017/001520
(87) International publication number: WO 2017/171229

(56) References cited:
- EP-A1- 1 659 004
- DE-A1-102014 206 009
- JP-A- 2004 276 809
- JP-A- 2006 143 021
- JP-A- 2006 335 199
- JP-A- 2006 335 199
- JP-A- 2015 209 198
- JP-A- 2015 209 198
- JP-B2- 4 567 423
- US-A1- 2010 307 655
- US-B2- 7 188 652

## Description

The present invention relates to a pneumatic tire according to the preamble of claim 1.

A vehicle's tire contacting the ground plays an important role in the driving and braking of the vehicle. The noise of a vehicle may be classified into vehicle body noise and tire noise. The tire noise may be mainly caused by air cavity noise inside a tire.

Pneumatic tires of the type mentioned at the outset and similar prior art pneumatic tires are disclosed in laid-open publications JP 2006-143021 A, EP 1 659 004 A1, DE 10 2014 206 009 A1, US 2010/0307655 A1, JP 2006-335199 A, and JP 2015-209198 A.

It is the technical problem underlying the invention to provide a pneumatic tire of the type mentioned at the outset which shows improvements over the prior art mentioned above, in particular regarding reduction of air cavity noise while maintaining other desirable tire characteristics.

The invention solves this problem by providing a pneumatic tire having the features of claim 1. Advantageous embodiments of the invention are mentioned in the dependent claims.

According to the invention, the pneumatic tire includes a tread having a groove; a pair of side walls respectively arranged at opposite ends of the tread; and a sound absorbing member positioned on an inner side of the pneumatic tire and including a pair of edges and a central part, the pair of edges being respectively adjacent to the pair of side walls and having a first thickness, and the central part being positioned between the pair of edges and having a second thickness, the second thickness being different from the first thickness. The sound absorbing member comprises a first surface facing the tread and a second surface opposite the first surface, wherein the second surface comprises a curved surface extending from one of the pair of edges to the other one, past the central part, wherein the curved surface has a uniform radius curvature selected in the range of 150 mm to 250 mm.

The first thickness is less than the second thickness.

A minimum value of the second thickness may be 2 cm.

The sound absorbing member may be symmetrical with respect to a central line of the tread.

The sound absorbing member may extend along a circumferential direction of the pneumatic tire, and a first end and a second end of the sound absorbing member may be separated from each other in the circumferential direction.

A high-value point position of radial force first harmonic (RF1H) of the pneumatic tire may be between the first end and the second end. The high-value point position of the RF1H of the pneumatic tire may denote a position of the pneumatic tire, the position of the pneumatic tire corresponding to a high-value point position of an RF1H component of radial force variation.

A minimum value of an angle between the first end and the second end with respect to a center of a wheel rim of the pneumatic tire may be 10°.

The pneumatic tire may further include an adhesive layer positioned between an inner surface of the tread and the sound absorbing member and a primer layer positioned between the adhesive layer and the inner surface of the tread.

The sound absorbing member may include ether based polyurethane foam.

A first width of the sound absorbing member may be about 55 % to about 65 % of a second width between the pair of side walls and may be about 120 mm to about 160 mm.

A volume of the sound absorbing member may be about 5 % to 25 % of a volume of a cavity of the pneumatic tire.

Other aspects, features, and advantages than those described above will be clear from the accompanying drawings, the claims, and the descriptions of embodiments below.

According to the invention, air cavity noise occurring inside a pneumatic tire may be effectively reduced. It will be apparent that the scope of the invention is not limited by this effect.

Advantageous embodiments of the invention are illustrated in the drawings and will be described in further detail below. In the drawings:
FIG. 1 is a perspective view of a pneumatic tire according to an embodiment of the invention.
FIG. 2 is a cross-sectional view taken along line II-II in FIG. 1.
FIG. 3 is an enlarged cross-sectional view of a portion III in FIG. 2.
FIGS. 4 and 5 are perspective views of a sound absorbing member of a pneumatic tire, according to embodiments of the invention.
FIG. 6A is a perspective view of a sound absorbing member according to embodiments of the invention.
FIG. 6B is a schematic perspective view of a state in which the sound absorbing member of FIG. 6A is installed in a pneumatic tire.
FIG. 6C is a schematic side view of a pneumatic tire in which the sound absorbing member of FIG. 6A has been installed.
FIG. 7 is a graph showing radial force variation (RFV) and radial force first harmonic (RF1H) of the pneumatic tire of FIG. 6C.
FIG. 8 is a cross-sectional view of a sound absorbing member in FIG. 2.
FIG. 9 is a graph of noise versus the height of a central part of a sound absorbing member.
FIGS. 10 and 11 are cross-sectional views of sound absorbing members according to background art useful for understanding the invention.

The present invention includes various modifications and different embodiments. In this regard, specific embodiments are illustrated in the drawings and will be described in detail. Advantageous effects, features, and methods for achieving the effects and features will become more apparent by explaining the embodiments in detail with reference to the accompanying drawings. However, the present invention is not limited to these embodiments but may be implemented in various modes.

The embodiments of the present invention will now be described in detail with reference to the accompanying drawings, in which like reference numerals denote like elements, and thus their description will be omitted.

It will be understood that the terms "comprises" and/or "comprising," or "includes" and/or "including" when used in this specification, specify the presence of stated features or components, but do not preclude the presence or addition of one or more other features or components.

It also will be understood that when a portion of a film, a region, an element, or the like is referred to as being "on" another portion, it can be directly on the other portion, or intervening films, regions, or elements may also be present.

In the drawings, the size of elements may be exaggerated or reduced for clarity. For instance, the size and thickness of each element may be arbitrarily illustrated in the drawings, and therefore, the present disclosure is not limited to the drawings.

When it is possible to modify an embodiment, the order of processes may be different from the order in which the processes have been described. For instance, two processes described as being performed sequentially may be substantially performed simultaneously or in a reverse order.

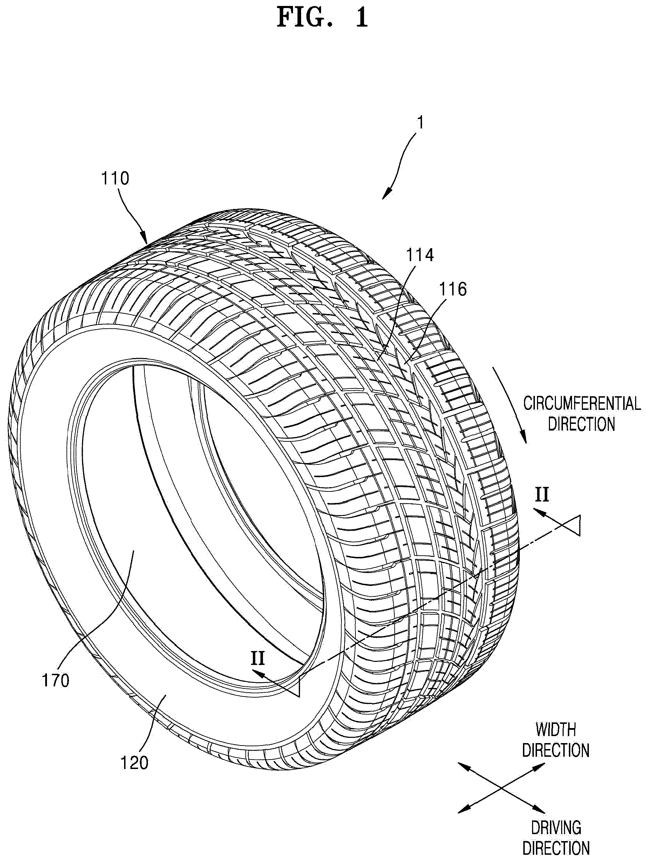

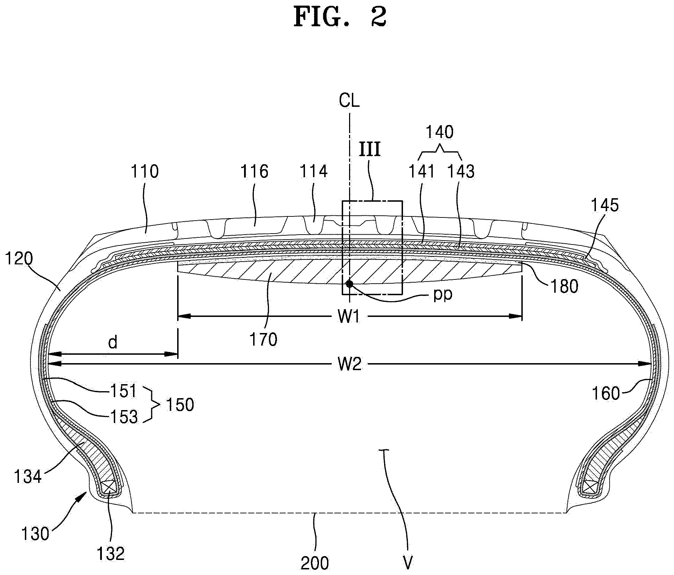

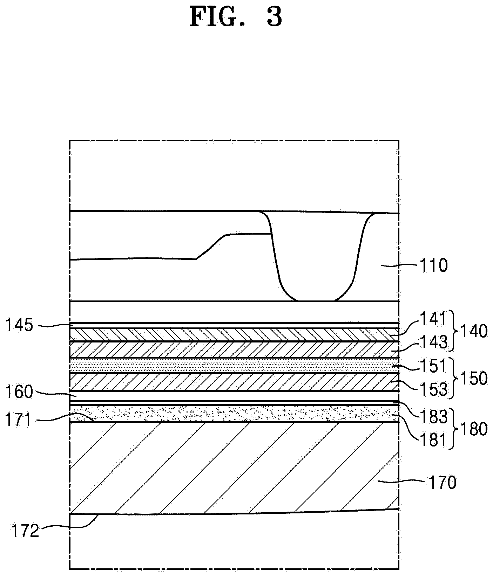

FIG. 1 is a perspective view of a pneumatic tire according to an embodiment of the present invention. FIG. 2 is a cross-sectional view taken along line II-II in FIG. 1. FIG. 3 is an enlarged cross-sectional view of a portion III in FIG. 2.

Referring to FIGS. 1 through 3, a pneumatic tire 1 may include a tread 110, a pair of side walls 120 connected to the tread 110, a bead portion 130 positioned at the bottom of each of the side walls 120, a belt layer 140 and a carcass layer 150 which are positioned below the tread 110, an inner liner 160 adhering to an inner surface of the carcass layer 150, and a sound absorbing member 170 positioned on an inner side of the tread 110.

The tread 110 is positioned at the outermost surface of the pneumatic tire 1. The tread 110 includes a thick rubber layer and delivers a driving force and braking force of a vehicle to the ground. Tread patterns 114 for steering stability, traction, and braking and blocks 116 divided by the tread patterns 114 may be arranged in a surface of the tread 110.

The tread patterns 114 include grooves for drainage while driving over wet roads and sipes for improving traction and braking force. The grooves may include a circumferential groove in a driving direction of a vehicle and a lateral groove between circumferential grooves. The sipes may be formed in the blocks 116 and may be furrows smaller than the grooves. The sipes may increase the driving force and the braking force of the pneumatic tire 1 by sucking moisture and cutting off the layer of water while driving over wet roads.

The blocks 116 occupy the greater part of the tread 110 and deliver the driving force and the braking force of a vehicle to the ground by making direct contact with the ground.

Each of the side walls 120 extends below from an end of the tread 110. Each side wall 120 is a side portion of the pneumatic tire 1. The side wall 120 may protect the carcass layer 150, provide lateral stability for the pneumatic tire 1, and increase ride comfort by performing a bending and stretching motion. In addition, the side wall 120 transmits engine torque from a drive shaft to the tread 110.

The bead portion 130 is provided at an end of the side wall 120 and enables the pneumatic tire 1 to be mounted on a wheel rim 200. The bead portion 130 may include a bead core 132 and a bead filler 134. The bead core 132 may be formed by interlacing a plurality of rubber-coated steel wires. The bead filler 134 may be rubber adhering to the bead core 132.

The belt layer 140 is positioned below the tread 110. The belt layer 140 reduces road shock during the driving of a vehicle and protects the carcass layer 150. In an embodiment, the belt layer 140 includes a first belt layer 141 and a second belt layer 143, which are piled up on each other. The first belt layer 141 may be positioned on the second belt layer 143. A width of the first belt layer 141 may be less than a width of the second belt layer 143.

A cap play 145 may be further provided between the tread 110 and the belt layer 140. The cap play 145 is a special cord fabric adhering to the belt layer 140. The cap play 145 may increase driving performance and may include a polyester fiber.

The carcass layer 150 is positioned below the belt layer 140 and forms the framework of the pneumatic tire 1. The carcass layer 150 endures load and impact on the pneumatic tire 1 and maintains an air pressure in the pneumatic tire 1. In an embodiment, the carcass layer 150 may include a first carcass layer 151 and a second carcass layer 153 overlapping each other. The first carcass layer 151 is turned up around the bead portion 130 and extends toward the tread 110. A turned-up end portion of the first carcass layer 151 may extend to cover an inner side of the side wall 120, thereby enhancing the rigidity of the side wall 120. The second carcass layer 153 may be positioned on the first carcass layer 151 and turned around the bead portion 130 and extend toward the tread 110. A turned-up end portion of the second carcass layer 153 may cover the inner side of the bead portion 130 and may be shorter than that of the first carcass layer 151. Although the carcass layer 150 includes two carcass layers in the current embodiment, the present disclosure is not limited thereto. In one or more embodiments, the carcass layer 150 may include a single layer.

The inner liner 160 is a layer which prevents air escaping from the pneumatic tire 1 instead of a tube. The inner liner 160 may include a rubber layer having high air-tightness. In an embodiment, the inner liner 160 may include high-density butyl rubber and maintain the air pressure in the pneumatic tire 1.

The sound absorbing member 170 is positioned on the inner side of the tread 110, e.g., on the inner liner 160 between the side walls 120. The sound absorbing member 170 may prevent vibration from being transmitted to the interior of a vehicle by reducing air cavity noise occurring inside the pneumatic tire 1.

The sound absorbing member 170 may have a structure which is substantially bilaterally symmetrical with respect to a central line CL in FIG. 2. Here, the central line CL passes through the center of the tread 110. Ideally, a peak point "pp" of the sound absorbing member 170 may be substantially on the central line CL, but the peak point "pp" may be positioned with a margin of ±3 mm to the left and to the right from the central line CL, considering an installation error of the sound absorbing member 170. When the sound absorbing member 170 is positioned beyond the range described above, pulling may occur due to tire conicity during driving.

A first width W1 of the sound absorbing member 170 is less than a second width W2 between the side walls 120. Here, the second width W2 is the greatest width (or distance) between inner sides of the respective side walls 120. The first width W1 may be selected in a range from about 55 % to about 65 % of the second width W2 and may be selected in a range from about 120 mm to about 160 mm. When the first width W1 is set in the range described above, the sound absorbing member 170 may maintain satisfactory sound absorbing performance without being detached from the inner surface of the pneumatic tire 1.

Opposite edges of the sound absorbing member 170, i.e., edges respectively adjacent to the side walls 120, are respectively separated from the inner surfaces of the respective side walls 120 by a predetermined distance. A distance "d" between the inner surface of each of the side walls 120 and an adjacent edge of the sound absorbing member 170 may be selected in a range greater than about 17.5 %, e.g., from about 17.5 % to about 22.5 %, of the second width W2. In particular, when the distance "d" is less than the lower limit of the range described above, an end of the sound absorbing member 170 may be separated (e.g., detached) from the inner surface of the pneumatic tire 1 due to an external force applied to the pneumatic tire 1 during driving.

The sound absorbing member 170 may be coupled to the inner liner 160 by an adhesive member 180. A first surface 171 of the sound absorbing member 170 is fixedly coupled to the inner liner 160 by the adhesive member 180, and a second surface 172 of the sound absorbing member 170 faces the inner side of the pneumatic tire 1.

As shown in FIG. 3, the adhesive member 180 may include a double-sided adhesive layer 181 between the first surface 171 of the sound absorbing member 170 and the inner liner 160 and a primer layer 183 between the double-sided adhesive layer 181 and the inner liner 160.

An adhesive layer such as a double-sided tape may be used as the double-sided adhesive layer 181. The primer layer 183 is used to increase a fixed-bonding force of the sound absorbing member 170 using the double-sided adhesive layer 181. The primer layer 183 may include a polyurethane or rubber material.

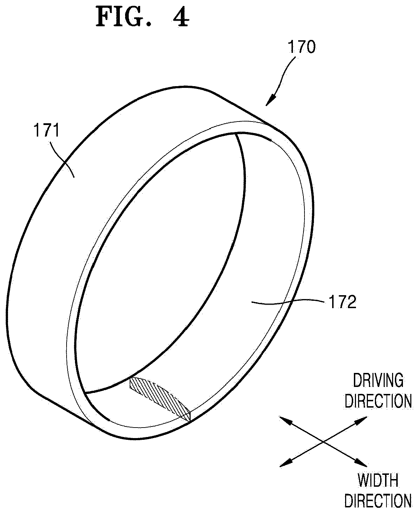

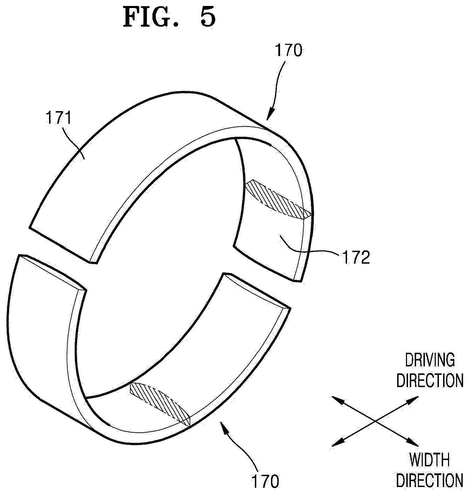

FIGS. 4 and 5 are perspective views of a sound absorbing member installed in a pneumatic tire, according to some embodiments of the present invention.

Referring to FIG. 4, the sound absorbing member 170 may be integrally formed and have a ring shape extending along a circumferential direction of the pneumatic tire 1 (see FIG. 1).

Referring to FIG. 5, in one or more embodiments, a plurality of sound absorbing members 170 may be spaced apart from each other along the circumferential direction of the pneumatic tire 1 (see FIG. 1).

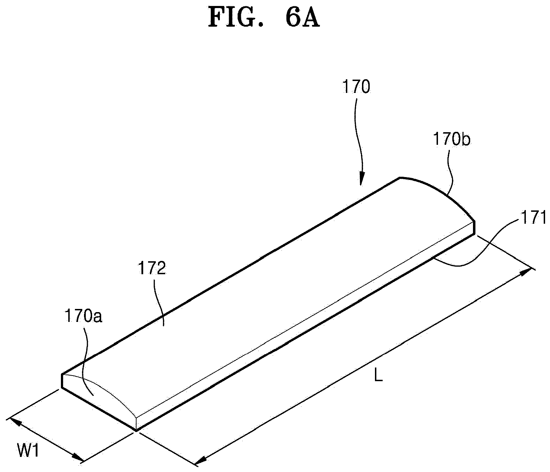

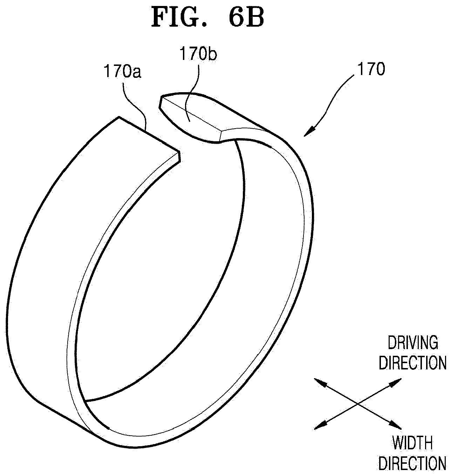

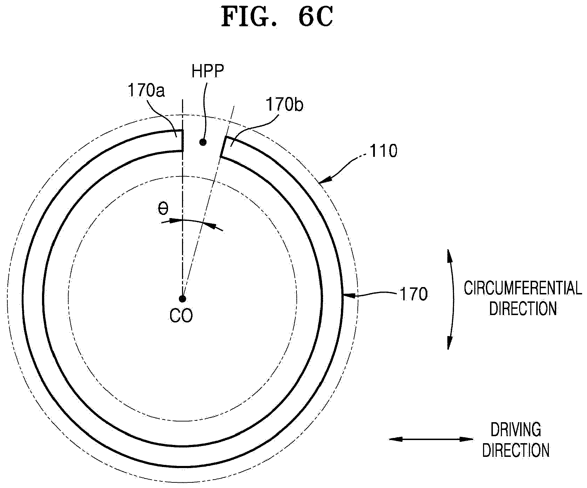

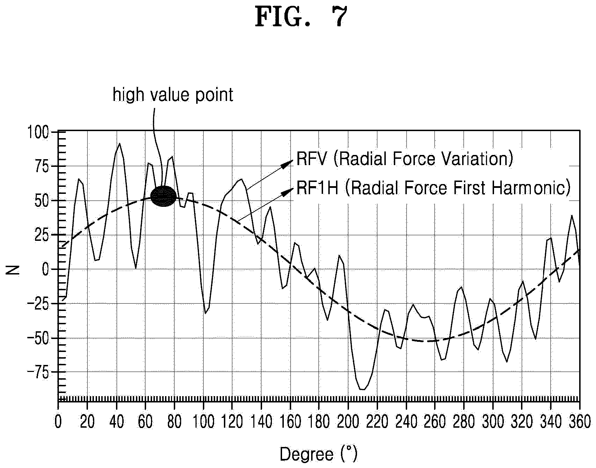

FIG. 6A is a perspective view of a sound absorbing member according to one or more embodiments of the present invention. FIG. 6B is a schematic perspective view of a state in which the sound absorbing member of FIG. 6A is installed in a pneumatic tire. FIG. 6C is a schematic side view of a pneumatic tire in which the sound absorbing member of FIG. 6A has been installed. FIG. 7 is a graph showing radial force variation (RFV) and radial force first harmonic (RF1H) of the pneumatic tire of FIG. 6C.

Referring to FIGS. 6A and 6B, the first width W1 of the sound absorbing member 170 may be selected in the range from about 55 % to about 65 % of the second width W2 and may be selected in the range from about 120 mm to about 160 mm, as described above with reference to FIG. 2. The first width W1 may be constant along a length L. The length L of the sound absorbing member 170 may be selected in a range from 15 to 25 times the first width W1. For example, the length L of the sound absorbing member 170 may be selected in a range from 15 to 20 times the first width W1.

As shown in FIGS. 6B and 6C, the sound absorbing member 170 extends along the circumferential direction of the pneumatic tire 1, and a first end 170a of the sound absorbing member 170 is separated from a second end 170b of the sound absorbing member 170 along the circumferential direction. To satisfy the uniformity of the pneumatic tire 1, the sound absorbing member 170 is positioned on the inner surface of the pneumatic tire 1 such that a high-value point position (HPP) of the RF1H of the pneumatic tire 1 is between the first end 170a and the second end 170b of the sound absorbing member 170. Here, the HPP of the RF1H of the pneumatic tire 1 is defined below.

When the RF1H of the RFV of the pneumatic tire 1 is analyzed in a range from 0° to 360° around a center C0 of the wheel rim 200 (see FIG. 2), the RF1H roughly has a sine waveform, as shown in the graph of FIG. 7. The "HPP of the RF1H" of the pneumatic tire 1 refers to a position of a portion corresponding to a high-value point of an RF1H waveform in the pneumatic tire 1.

When RF1H is repeatedly analyzed with respect to the pneumatic tire 1, the high-value point of the sine waveform may have a deviation of about 10°. When this fact is considered, it may be set that the HPP of the RF1H is positioned between the first end 170a and the second end 170b and an angle θ between the first end 170a and the second end 170b is equal to or greater than 10°, as shown in FIG. 6C. In other words, a minimum distance between the first end 170a and the second end 170b may be a distance when the angle θ between the first end 170a and the second end 170b with respect to the center C0 of the wheel rim 200 is 10° (provided that the HPP of the RF1H of the pneumatic tire 1 is between the first end 170a and the second end 170b). When the distance between the first end 170a and the second end 170b is set in the range described above, the uniformity of the pneumatic tire 1 including the sound absorbing member 170 may be satisfied.

In an embodiment, the HPP of the RF1H of the pneumatic tire 1 may be positioned at the center between the first end 170a and the second end 170b. For example, an angle between the first end 170a and the HPP of the RF1H with respect to the center C0 of the wheel rim 200 may be at least about 5° and an angle between the second end 170b and the HPP of the RF1H with respect to the center C0 of the wheel rim 200 may be at least about 5°.

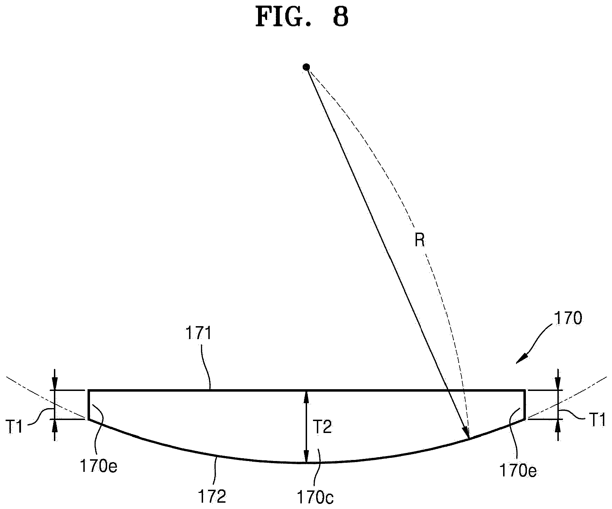

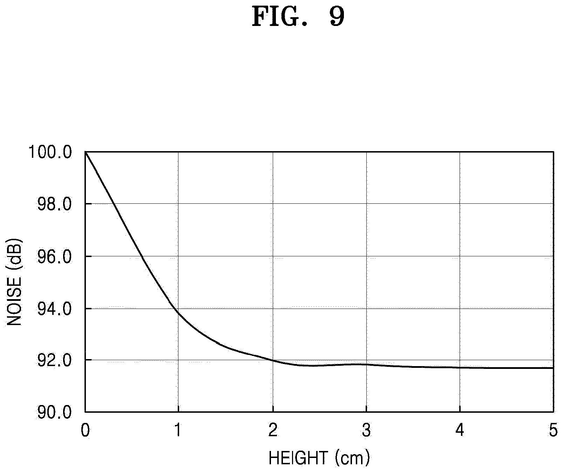

FIG. 8 is a cross-sectional view of a sound absorbing member in FIG. 2. FIG. 9 is a graph of noise versus the height of a central part of a sound absorbing member.

Referring to FIG. 8, the sound absorbing member 170 has a shape which is bilaterally symmetrical with respect to a central part 170c. In addition, the peak point "pp" of the central part 170c of the sound absorbing member 170 may be positioned on the central line CL of the tread 110, as described above with reference to FIG. 2. Accordingly, the center of mass may be positioned at a center (e.g., the central line CL (see FIG. 2)) of the pneumatic tire 1, and mass distribution of the pneumatic tire 1 may be prevented from leaning to a certain position during driving.

The sound absorbing member 170 has a width which is not constant along a width direction of the pneumatic tire 1. A thickness of the sound absorbing member 170 continuously (or gradually) decreases from the central part 170c toward each of edges 170e.

When the sound absorbing member 170 has the central part 170c that has a second thickness T2, which is greater than a first thickness T1 of the edges 170e, air vibration inside the pneumatic tire 1 may be efficiently dispersed, and therefore, cavity noise may be efficiently reduced. The first thickness T1 of the edges 170e is less than the second thickness T2. In a comparative example, when the first thickness T1 of the edges 170e is equal to or greater than the second thickness T2 of the central part 170c, the bending and stretching of an edge portion of the pneumatic tire 1 is reduced during driving such as handling or cornering. However, in an embodiment of the present invention, the first thickness T1 of the edges 170e is less than the second thickness T2, so that noise may be reduced, and also reduction of driving performance of the pneumatic tire 1 may be prevented.

The second thickness T2 of the central part 170c may be greater than about 2.0 cm. As shown in FIG. 9, it may be confirmed that a minimum value of the second thickness T2 of the central part 170c for noise reduction is about 2.0 cm. Referring to FIG. 9, it may be confirmed that the noise rapidly increases when the second thickness T2 of the central part 170c is less than about 2.0 cm.

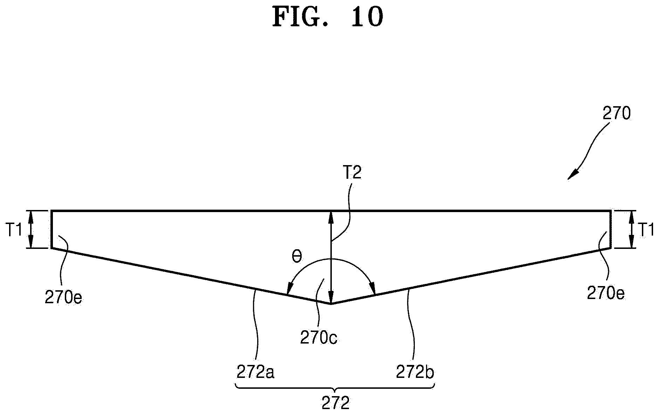

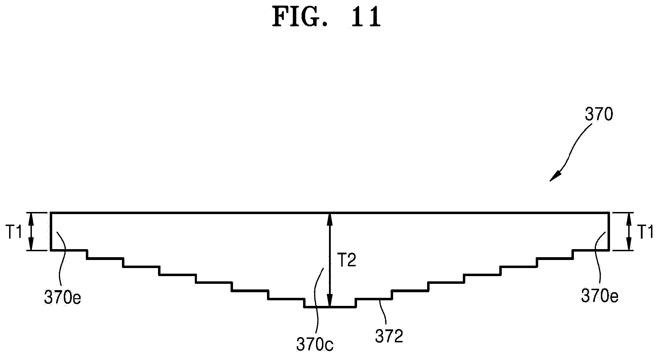

While the first surface 171 of the sound absorbing member 170 is a relatively flat surface, the second surface 172 of the sound absorbing member 170 includes a curved surface which has a constant/uniform curvature (or radius of curvature R), as shown in FIG. 8. The second surface 172 that includes the curved surface does not reduce air flow inside a tire, thereby satisfactorily securing sound absorption and vibration characteristics. When the second surface 172 includes an angular portion having an angle in one or more background embodiments (shown in FIGS. 10 and 11), which will be described below, a shape of the angular portion may affect the flow and absorption of cavity resonance noise in the pneumatic tire 1, thereby decreasing the sound and vibration absorbing performance of the pneumatic tire 1. Accordingly, it is more desirable that the second surface 172 has a curved surface.

For example, the second surface 172 has a radius of curvature R of about 150 mm to about 250 mm. Considering that the minimum value of the second thickness T2 of the central part 170c is 2.0 cm as described above, the durability of the edges 170e of the sound absorbing member 170 may be reduced when the radius of curvature R of the second surface 172 is less than the lower limit described above, and the sound absorbing member 170 may substantially have a cuboid shape when the radius of curvature R is greater than the upper limit described above. A sound absorbing member substantially having a cuboid shape causes an increase in mass and volume, thereby reducing the fuel efficiency of a car equipped with a pneumatic tire. In addition, a pneumatic tire that includes the sound absorbing member substantially having a cuboid shape may have a vibration due to the shape of a cavity of the pneumatic tire, e.g., a vibration due to the flow of fluid in the cavity. However, when the pneumatic tire 1 includes the sound absorbing member 170, according to embodiments of the present invention, probability that a vibration occurs due to the shape of a cavity of the pneumatic tire 1 may be minimized. In a non-restrictive embodiment, the radius of curvature R of the second surface 172 may be about 200 mm.

The sound absorbing member 170 may include a polymer material having a density of about 10 kg/m³ to about 50 kg/m³. When the density is less than 10 kg/m³, sound absorption decreases. When the density exceeds 50 kg/m³, the weight of the sound absorbing member 170 increases and fatigue is accumulated in the pneumatic tire 1.

The volume of the sound absorbing member 170 may be selected in a range from about 5 % to about 25 % of a volume V of the cavity of the pneumatic tire 1. The volume V of the cavity of the pneumatic tire 1 is a volume of a space between the pneumatic tire 1 and the wheel rim 200, as shown in FIG. 2. When the volume of the sound absorbing member 170 is beyond the range described above, the rolling resistance of the pneumatic tire 1 may increase due to an increase in the weight of the sound absorbing member 170, and the uniformity thereof may decrease.

The sound absorbing member 170 may include a polymer material which has a tearing strength of about 0.1 kg/cm to about 1.5 kg/cm and a tensile strength of about 1.0 kg/cm² to about 2.5 kg/cm². In addition, the sound absorbing member 170 may include a polymer material which has an elongation of about 100 % to about 300 %.

The sound absorbing member 170 may include ether or ester based polyurethane foam. Ether based polyurethane foam has better chemical resistance, water resistance, cold resistance, and dynamic fatigue properties than ester based polyurethane foam.

FIG. 10 is a cross-sectional view of a sound absorbing member according to one or more embodiments of background art.

Referring to FIG. 10, a sound absorbing member 270 includes all features of the sound absorbing member 170 described above, excepting that a second surface 272 does not include a curved surface. For convenience's sake, descriptions below will be focused on differences.

The second surface 272 of the sound absorbing member 270 includes a first sub-surface 272a extending from a central part 270c toward to one of edges 270e and a second sub-surface 272b extending from the central part 270c toward to the other of the edges 270e. Each of the first and second sub-surfaces 272a and 272b may include a flat surface. An internal angle θ between the first and second sub-surfaces 272a and 272b may be an obtuse angle.

FIG. 11 is a cross-sectional view of a sound absorbing member according to one or more embodiments of background art.

Referring to FIG. 11, a sound absorbing member 370 includes all features of the sound absorbing members 170 and 270 described above, excepting that a second surface 372 includes a ribbed surface and the thickness of the sound absorbing member 370 continuously (or gradually) changes. For convenience's sake, descriptions below will be focused on differences.

The second surface 372 of the sound absorbing member 370 may have an irregular/ribbed surface. In an embodiment, the second surface 372 may have a rib having a stair-shaped cross-section as shown in FIG. 11. In one or more embodiments, the rib of the second surface 372 may be variously changed. For example, the cross-section of the rib may have a sawtooth shape or an embossed shape with a curved surface.

The sound absorbing member 370 may have a thickness which decreases discontinuously (or in stages) in a direction from a central part 370c toward each of a pair of edges 370e.

In the sound absorbing members 270 and 370 described above with reference to FIGS. 10 and 11, the second surfaces 272 and 372 include an angular portion having an angle, and therefore, the angular portion may affect the flow and absorption of cavity resonance noise in the pneumatic tire 1, thereby decreasing the sound and vibration absorbing performance, as described above. Accordingly, it is more desirable that the second surface 172 has a curved surface, as described above with reference to FIG. 8.

## Claims

1. A pneumatic tire comprising:
a tread (110) having a groove (114),
a pair of side walls (120) respectively arranged at opposite ends of the tread (110), and
a sound absorbing member (170) positioned on an inner side of the pneumatic tire and comprising a pair of edges (170e) and a central part (170c), the pair of edges (170e) being respectively adjacent to the pair of side walls (120) and having a first thickness (T1), and the central part (170c) being positioned between the pair of edges (170e) and having a second thickness (T2), the first thickness (T1) being less than the second thickness (T2),
**characterized in that**
the sound absorbing member (170) comprises a first surface (171) facing the tread (110), and a second surface (172) opposite the first surface (171), the second surface being a curved surface extending from one of the pair of edges (170e) to the other one, wherein the curved surface has a uniform radius of curvature selected in the range of 150 mm to 250 mm.

2. The pneumatic tire of claim 1, wherein a minimum value of the second thickness (T2) is 2 cm.

3. The pneumatic tire of claim 1 or 2, wherein the sound absorbing member is symmetrical with respect to a central line (CL) of the tread (110).

4. The pneumatic tire of any one of claims 1 to 3, wherein the sound absorbing member (170) extends along a circumferential direction of the pneumatic tire (1), and a first end (170a) and a second end (170b) of the sound absorbing member (170) are separated from each other in the circumferential direction.

5. The pneumatic tire of claim 4, wherein a high-value point position (HPP) of radial force first harmonic (RF1H) of the pneumatic tire is between the first end (170a) and the second end (170b), wherein the high-value point position of the RF1H of the pneumatic tire denotes a position of the pneumatic tire corresponding to a high-value point position of a radial force first harmonic (RF1H) component of radial force variation.

6. The pneumatic tire of claim 5, wherein a minimum value of an angle (θ) between the first end and the second end with respect to a center (C0) of a wheel rim (200) of the pneumatic tire is 10°.

7. The pneumatic tire of any one of claims 1 to 6, further comprising:
an adhesive layer (180) positioned between an inner surface of the tread (110) and the sound absorbing member (170), and
a primer layer (160) positioned between the adhesive layer (180) and the inner surface of the tread (110).

8. The pneumatic tire of any one of claims 1 to 7, wherein the sound absorbing member (170) includes ether based polyurethane foam.

9. The pneumatic tire of any one of claims 1 to 8, wherein a first width (W1) of the sound absorbing member (170) is about 55 % to about 65 % of a second width (W2) between the pair of side walls (120) and is about 120 mm to about 160 mm.

10. The pneumatic tire of claim 9, wherein a volume of the sound absorbing member (170) is about 5 % to 25 % of a volume (V) of a cavity of the pneumatic tire.

## Patentansprüche

1. Luftreifen, umfassend:
eine Lauffläche (110) mit einer Rille (114),
ein Paar Seitenwände (120), die jeweils an gegenüberliegenden Enden der Lauffläche (110) angeordnet sind, und
ein Schalldämpfungselement (170), das an einer Innenseite des Luftreifens positioniert ist und ein Paar Ränder (170e) sowie einen Mittelteil (170c) umfasst, wobei das Paar Ränder (170e) jeweils neben dem Paar Seitenwände (120) gelegen ist und eine erste Dicke (T1) aufweist und wobei der Mittelteil (170c) zwischen dem Paar Ränder (170e) positioniert ist und eine zweite Dicke (T2) aufweist, wobei die erste Dicke (T1) geringer ist als die zweite Dicke (T2),
**dadurch gekennzeichnet, dass**
das Schalldämpfungselement (170) eine erste Fläche (171), die der Lauffläche (110) zugewandt ist, und eine zweite Fläche (172) gegenüberliegend der ersten Fläche (171) umfasst, wobei die zweite Fläche als gekrümmte Fläche ausgebildet ist, die sich von einem Rand des Ränderpaares (170e) zum anderen erstreckt, wobei die gekrümmte Fläche einen gleichmäßigen Krümmungsradius aufweist, der aus dem Bereich von 150 mm bis 250 mm ausgewählt ist.

2. Luftreifen nach Anspruch 1, wobei ein minimaler Wert der zweiten Dicke (T2) 2 cm beträgt.

3. Luftreifen nach Anspruch 1 oder 2, wobei das Schalldämpfungselement zu einer Mittellinie (CL) der Lauffläche (110) symmetrisch ausgebildet ist.

4. Luftreifen nach einem der Ansprüche 1 bis 3, wobei das Schalldämpfungselement (170) sich entlang einer Umfangsrichtung des Luftreifens (1) erstreckt und ein erstes Ende (170a) und ein zweites Ende (170b) des Schalldämpfungselements (170) in der Umfangsrichtung voneinander beabstandet sind.

5. Luftreifen nach Anspruch 4, wobei eine Maximumposition (HPP) der ersten Harmonischen der Radialkraft (RF1H) des Luftreifens zwischen dem ersten Ende (170a) und dem zweiten Ende (170b) liegt, wobei die Maximumposition der RF1H des Luftreifens eine Position des Luftreifens bezeichnet, die einer Maximumposition einer Komponente der Radialkraftvariation bezüglich der ersten Harmonischen der Radialkraft (RF1H) entspricht.

6. Luftreifen nach Anspruch 5, wobei ein minimaler Wert eines Winkels (θ) zwischen dem ersten Ende und dem zweiten Ende in Bezug auf einen Mittelpunkt (C0) eines Radkranzes (200) des Luftreifens 10° beträgt.

7. Luftreifen nach einem der Ansprüche 1 bis 6, weiter umfassend:
eine Klebschicht (180), die zwischen einer Innenfläche der Lauffläche (110) und dem Schalldämpfungselement (170) positioniert ist, und
eine Primerschicht (160), die zwischen der Klebschicht (180) und der Innenfläche der Lauffläche (110) positioniert ist.

8. Luftreifen nach einem der Ansprüche 1 bis 7, wobei das Schalldämpfungsglied (170) einen Polyurethanschaumstoff auf Etherbasis aufweist.

9. Luftreifen nach einem der Ansprüche 1 bis 8, wobei eine erste Breite (W1) des Schalldämpfungselements (170) ungefähr 55 % bis ungefähr 65 % einer zweiten Breite (W2) zwischen dem Paar Seitenwände (120) beträgt und bei ungefähr 120 mm bis ungefähr 160 mm liegt.

10. Luftreifen nach Anspruch 9, wobei ein Volumen des Schalldämpfungselements (170) ungefähr 5 % bis 25 % eines Volumens (V) eines Hohlraums des Luftreifens beträgt.

## Revendications

1. Pneumatique, comprenant :
une bande de roulement (110) comportant une rainure (114),
deux parois latérales (120) disposées respectivement au niveau d'extrémités opposées de la bande de roulement (110), et
un élément d'absorption acoustique (170) positionné sur un côté interne du pneumatique et comprenant deux bords (170e) et une partie centrale (170c), les deux bords (170e) étant respectivement adjacents aux deux parois latérales (120) et ayant une première épaisseur (T1), et la partie centrale (170c) étant positionnée entre les deux bords (170e) et ayant une seconde épaisseur (T2), la première épaisseur (T1) étant plus mince que la seconde épaisseur (T2),
**caractérisé en ce que**
l'élément d'absorption acoustique (170) comprend une première surface (171) faisant face à la bande de roulement (110), et une seconde surface (172) opposée à la première surface (171), la seconde surface étant une surface incurvée s'étendant de l'un des deux bords (170e) à l'autre bord, dans lequel la surface incurvée a un rayon de courbure uniforme choisi dans la plage de 150 mm à 250 mm.

2. Pneumatique selon la revendication 1, dans lequel une valeur minimale de la seconde épaisseur (T2) est de 2 cm.

3. Pneumatique selon la revendication 1 ou la revendication 2, dans lequel l'élément d'absorption acoustique est symétrique par rapport à une ligne centrale (CL) de la bande de roulement (110).

4. Pneumatique selon l'une quelconque des revendications 1 à 3, dans lequel l'élément d'absorption acoustique (170) s'étend dans une direction circonférentielle du pneumatique (1), et une première extrémité (170a) et une seconde extrémité (170b) de l'élément d'absorption acoustique (170) sont séparées l'une de l'autre dans la direction circonférentielle.

5. Pneumatique selon la revendication 4, dans lequel une position de point de valeur élevée (HPP) de première harmonique de force radiale (RF1H) du pneumatique est située entre la première extrémité (170a) et la seconde extrémité (170b), dans lequel la position de point de valeur élevée de la RF1H du pneumatique désigne une position du pneumatique correspondant à une position de point de valeur élevée d'une composante de première harmonique de force radiale (RF1H) de variation de force radiale.

6. Pneumatique selon la revendication 5, dans lequel une valeur minimale d'un angle (θ) entre la première extrémité et la seconde extrémité par rapport à un centre (C0) d'une couronne de roue (200) du pneumatique est de 10°.

7. Pneumatique selon l'une quelconque des revendications 1 à 6, comprenant en outre :
une couche d'adhésif (180) positionnée entre la surface interne de la bande de roulement (110) et l'élément d'absorption acoustique (170), et
une couche d'accrochage (160) positionnée entre la couche d'adhésif (180) et la surface interne de la bande de roulement (110).

8. Pneumatique selon l'une quelconque des revendications 1 à 7, dans lequel l'élément d'absorption acoustique (170) comprend une mousse de polyuréthane à base d'éther.

9. Pneumatique selon l'une quelconque des revendications 1 à 8, dans lequel une première largeur (W1) de l'élément d'absorption acoustique (170) s'inscrit dans une plage d'environ 55 % à environ 65 % d'une seconde largeur (W2) entre les deux parois latérales (120) et est comprise entre environ 120 mm et environ 160 mm.

10. Pneumatique selon la revendication 9, dans lequel un volume de l'élément d'absorption acoustique (170) s'inscrit dans une plage d'environ 5 % à 25 % d'un volume (V) d'une cavité du pneumatique.
